Europäisches Patentamt

European Patent Office

Office européen des brevets

(19)

(11) Numéro de publication : **0 337 291 B1**

(12) **FASCICULE DE BREVET EUROPEEN**

(45) Date de publication du fascicule du brevet :
23.09.92 Bulletin 92/39

(51) Int. Cl.⁵ : **B42C 19/08,** B42C 19/00,
B65G 43/08

(21) Numéro de dépôt : **89106046.9**

(22) Date de dépôt : **06.04.89**

(54) **Procédé et dispositif de commande d'une machine à relier des liasses de feuilles par brochage.**

(30) Priorité : **14.04.88 FR 8805186**

(43) Date de publication de la demande :
**18.10.89 Bulletin 89/42**

(45) Mention de la délivrance du brevet :
**23.09.92 Bulletin 92/39**

(84) Etats contractants désignés :
**DE FR GB**

(56) Documents cités :
**DE-A- 3 613 120
FR-A- 2 502 547
FR-A- 2 540 788
US-A- 2 922 171**

(73) Titulaire : **C.P. BOURG INDUSTRIES S.A.
27, Rue Pierre Vincendon
F-38352 La Tour du Pin (FR)**

(72) Inventeur : **Champeaux, René
2, rue Jean Moulin
F-38300 Bourgoin Jallieu (FR)**
Inventeur : **Merlo, Jean-Pierre
Résidence "Les Grives" Bâtiment D
F-38300 Bourgoin Jallieu (FR)**

(74) Mandataire : **Degwert, Hartmut, Dipl.-Phys. et al
Patent Attorneys Prinz, Leiser, Bunke & Partner Manzingerweg 7
W-8000 München 60 (DE)**

## Description

Le présente invention concerne les machines conçues pour relier, plus spécialement par brochage, des feuilles, des liasses ou des feuillets, en vue de les présenter sous une forme organisée unitaire facilitant le rangement et la consultation.

L'invention vise, plus particulièrement, les moyens de commande ou de pilotage de telles machines.

D'une manière connue dans la technique voir (FR-A-2502547), les machines à relier par brochage sont organisées de manière à assurer, par un organe moteur, le déplacement alternatif d'un chariot en forme de pince devant différents postes d'intervention.

Généralement, une machine conçue sous un tel principe comprend un premier poste de chargement au niveau duquel un groupe de feuilles ou de feuillets est inséré manuellement, entre les mâchoires de la pince du chariot, afin que ce dernier en assure la prise en charge.

Le poste de chargement est suivi d'un poste de fraisage comprenant un organe de coupe tournant, chargé de rogner la tranche dorsale du paquet de feuilles, au fur et à mesure de son déplacement par le chariot. Le poste de fraisage est aussi chargé d'exécuter, dans cette tranche dorsale, un grecquage constitué par des saignées.

Le poste de fraisage est suivi par un poste d'encollage au niveau duquel la tranche dorsale reçoit une couche d'un produit adhésif, généralement amené à l'état fluide par thermofusion.

Au-delà du poste d'encollage, le chariot amène le paquet de feuilles serrées à l'aplomb d'un poste d'emboîtage pour le placer, en relation avec une couverture qui est pressée contre la tranche fraisée et encollée, pour en assurer sa solidarisation. A cet effet, le poste d'emboîtage comprend une table escamotable et des mors, en forme de lames, chargés de serrer la couverture sur les deux plats de la liasse dans les parties adjacentes au dos. Le poste d'emboîtage est, généralement, situé à l'aplomb d'un convoyeur d'évacuation.

Dans les machines du type ci-dessus, la cadence de fonctionnement maximale, c'est-à-dire le nombre de reliures pouvant être produit à l'heure, est déterminée directement par le choix de la puissance de l'organe moteur mis en oeuvre pour une épaisseur maximale de feuilles ou feuillets à réunir. Cette puissance motrice est déterminée pour tenir compte des conditions de fonctionnement du poste de fraisage et de grecquage qui est celui au niveau duquel la dépense en énergie motrice est la plus importante.

Bien entendu, pour obtenir une production plus élevée, il pourrait être envisagé de réaliser des machines comportant une puissance motrice plus importante. Toutefois, une telle démarche conduit, inévitablement, à une augmentation du prix de revient, un accroissement d'encombrement, ainsi qu'à une augmentation de la puissance électrique installée offerte par l'utilisateur.

Par ailleurs, les conditions d'utilisation de telles machines permettent de constater qu'il est rarement habituel de les mettre en oeuvre pour la réalisation de documents, de même épaisseur, voisine de l'épaisseur maximale. Il est, en effet, usuel qu'un utilisateur soit amené à réaliser des séries de brochages pour des liasses de feuilles présentant des épaisseurs variables et, notamment, le plus souvent, inférieures à celles correspondant à la capacité maximale de la machine.

Ainsi, dans tous les cas où la machine est utilisée pour brocher des liasses d'épaisseur inférieure à la liasse maximale, la production horaire n'est pas maximale, puisque la puissance de l'organe moteur n'est plus adaptée au travail à accomplir pour brocher de telles liasses.

La présente invention vise à remédier aux inconvénients énoncés ci-dessus, en proposant un dispositif et un procédé de commande pour une machine à relier par brochage, permettant d'adapter la puissance de l'organe moteur au travail à accomplir au niveau des postes d'intervention, de manière à obtenir une cadence de fonctionnement maximale pour chaque épaisseur de liasse présentée.

L'objet de l'invention est d'offrir un dispositif de commande pour une machine à relier par brochage, conçu pour assurer, en relation avec l'épaisseur de la liasse de feuilles à réunir, le réglage automatique de la puissance de l'organe moteur, sans nécessiter une intervention ou un réglage manuel.

L'objet de l'invention est de proposer aussi un dispositif de commande assurant le pilotage du temps de serrage du poste d'emboîtage, en relation avec l'épaisseur de la liasse de feuilles, de manière à obtenir un durcissement convenable de la colle préablement déposée.

Pour atteindre les objectifs ci-dessus, le procédé de commande de l'organe moteur d'une machine à relier par brochage consiste à :

– détecter par un capteur, après chargement d'une liasse de feuilles, l'épaisseur de la liasse maintenue serrée entre les mâchoires du chariot,

– et à piloter l'organe moteur pour modifier sa vitesse, en relation inverse de l'épaisseur de la liasse détectée.

Le dispositif de commande selon l'invention, pour une machine à relier par brochage, comporte:

– un capteur de détection de l'épaisseur de la liasse de feuilles chargée et maintenue serrée entre les mâchoires du chariot, apte à délivrer un signal représentatif de l'épaisseur de la liasse serrée,

– et un bloc de réglage de la vitesse de l'organe moteur, piloté par le signal issu du capteur.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une coupe-élévation schématique d'une machine à relier par brochage.

La **fig. 2** est une perspective partielle illustrant, schématiquement, la mise en oeuvre du dispositif de commande selon l'invention.

La **fig. 3** représente un schéma-bloc montrant le dispositif de commande selon l'invention.

La **fig. 4** est un schéma-bloc illustrant un détail caractéristique de l'invention.

La **fig. 5** est un schéma-bloc montrant une variante de réalisation de l'invention.

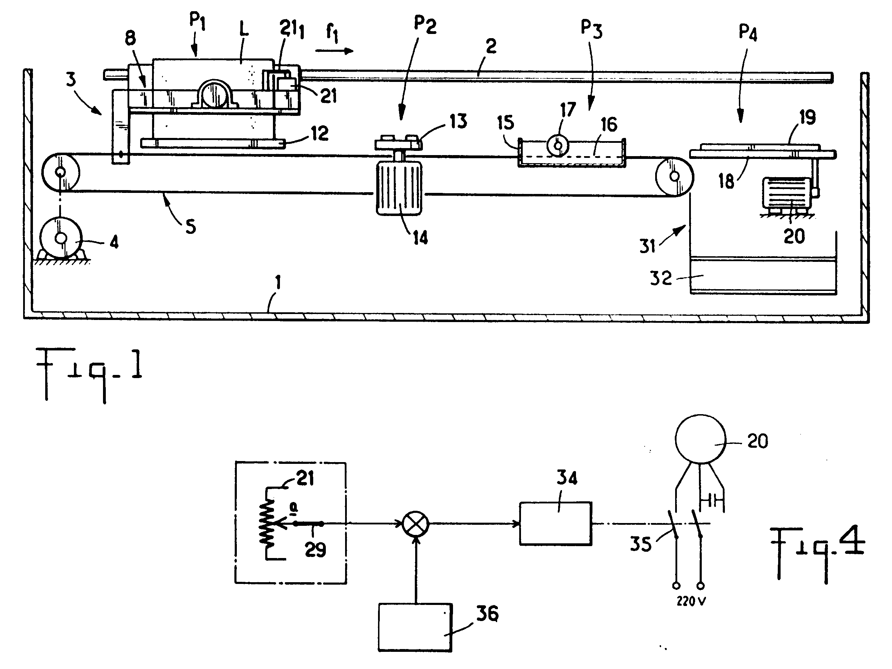

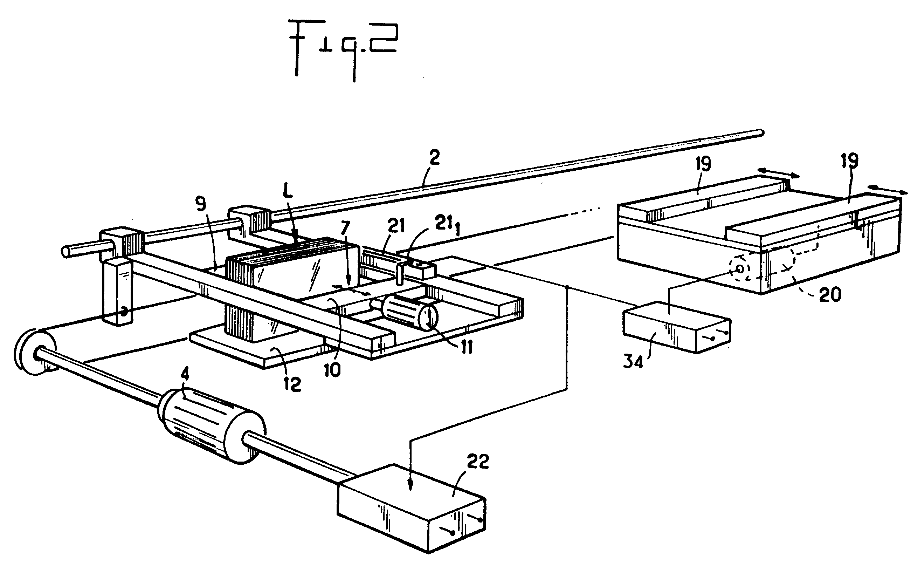

Les **fig. 1** et **2** montrent, de façon schématique, une machine à brocher des liasses de feuilles. Une telle machine comprend, de façon conventionnnelle, un bâti **1** définissant une voie de guidage **2** pour un chariot **3** susceptible d'être entraîné en déplacement alternatif sur la voie **2**, par l'intermédiaire d'un organe moteur **4** et d'une transmission **5**.

Le chariot **3** comprend une ouverture de chargement **7** pourvue d'une pince de serrage **8** s'étendant parallèlement à la voie de guidage **2**. De façon connue, la pince comprend une mâchoire fixe **9** et une mâchoire mobile **10** susceptible d'être réglée en écartement, par l'intermédiaire d'un organe moteur **11** dont l'alimentation, pour provoquer l'ouverture et la fermeture de la mâchoire **10**, est placée sous la dépendance de déroulement du cycle de fonctionnement de la machine.

La voie de guidage **2**, en général rectiligne, est établie parallèlement à différents postes d'intervention alignés devant lesquels ou en relation desquels le chariot **3** doit être déplacé. Les postes d'intervention comprennent, tout d'abord, un poste **P₁** formé d'une tablette de taquage **12** portée par le bâti **1**, pour s'étendre dans un plan inférieur à la pince de serrage et à l'aplomb de l'ouverture de chargement **7**.

Le poste de chargement **P₁** est suivi d'un poste de fraisage **P₂** comprenant, en alignement horizontal avec la tablette de taquage, un organe de coupe **13** susceptible d'être entraîné en rotation sur un axe vertical par un moteur **14**. L'organe de coupe **13** est constitué, d'une manière connue en soi, par au moins une fraise dont le profil des dents est choisi de manière à réaliser un rognage et un grecquage de la tranche dorsale d'une liasse de feuilles à relier par brochage.

Le poste de fraisage **P₂** est suivi d'un poste d'encollage **P₃** aligné avec les postes **P₁** et **P₂**. Le poste d'encollage **P₃** est, de préférence, à adhésif thermofusible et comprend un bac **15** contenant une réserve **16** d'adhésif du type "hot melt" entretenu à une température de fluidification par un système de chauffage régulé, non représenté. D'une façon connue, le bac **15** est associé à un cylindre encolleur **17**, entraîné en rotation par un moteur et plongeant, partiellement, en permanence dans la réserve **16**.

Le poste d'encollage **P₃** est suivi d'un poste d'emboîtage **P₄** comprenant une table escamotable **18**, normalement disposée en alignement avec les autres postes et chargée de recevoir une couverture à plat, non représentée, devant être liée à une liasse de feuilles. La table escamotable **18** est associée à deux lames de serrage **19** commandées, par un second organe moteur **20**, en rapprochement et en écartement relatif en synchronisme avec le cycle de fonctionnement de la machine.

Conformément à l'invention, la machine décrite ci-dessus comporte un dispositif de commande comprenant un capteur **21** de détection de l'épaisseur d'une liasse de feuilles serrée par la pince **8** du chariot et un bloc de réglage **22** de la vitesse de l'organe moteur **4**.

D'une manière avantageuse, le capteur **21** est constitué par un potentiomètre adapté sur le chariot, de manière que le curseur $21_1$ du potentiomètre soit monté solidaire de la mâchoire mobile **10** de la pince. Le capteur **21** est ainsi apte à délivrer directement un signal représentatif de l'épaisseur de la liasse de feuilles serrée entre mâchoires **9** et **10**.

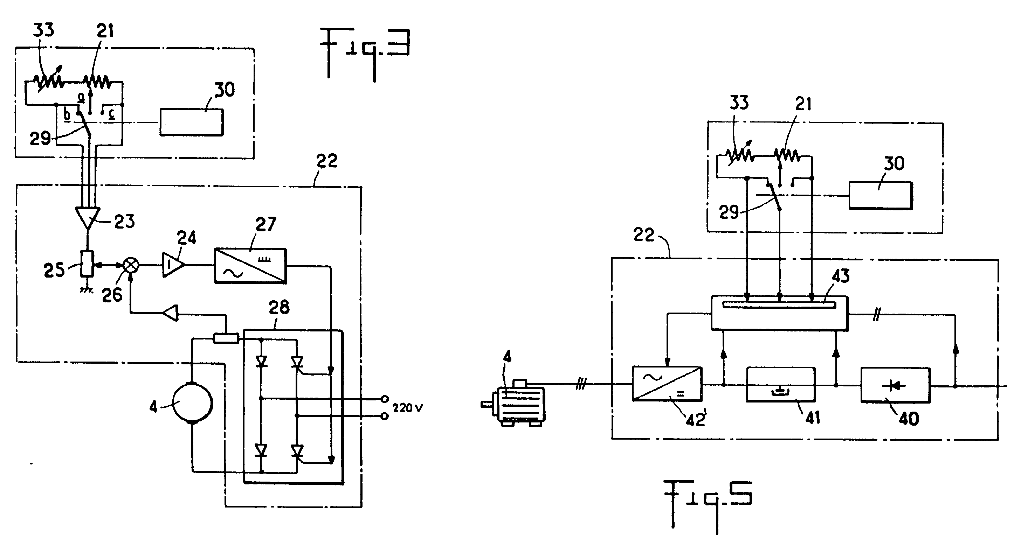

Tel que cela apparaît plus précisément à la **fig. 3**, le bloc **22** est piloté par le signal issu du potentiomètre **21**, de manière à régler la vitesse de l'organe moteur **4**. Selon une forme préférée de réalisation, le bloc de réglage **22** agit sur la tension d'alimentation de l'organe moteur **4**, constitué par un moteur électrique à courant continu.

Dans cet exemple de réalisation, le bloc **22** comprend un régulateur de vitesse **23** commandé par le signal délivré par le capteur **21**. La sortie du régulateur de vitesse **23** est reliée à un régulateur d'intensité **24**, à travers un circuit de limitation de courant **25** associé à un sommateur **26** qui reçoit un courant représentatif de celui circulant dans le circuit électrique du moteur **4**. Le régulateur d'intensité **24** est connecté, par un circuit **27**, à redresseur à thyristors **28** alimentant le moteur **4**. Le circuit **27** est destiné à assurer la commande des gâchettes des thyristors, de sorte que le redresseur **28** fournisse une tension d'alimentation variable dont le niveau est commandé par le potentiomètre déterminant le déphasage de gâchette des thyristors.

De préférence, le potentiomètre **21** est relié au bloc de réglage **22** par un commutateur **29** à trois positions **a, b, c**, placé sous le dépendance d'un circuit de sélection **30**. Le commutateur **29** permet de transmettre un signal provenant du curseur (position **a**) ou de l'une des bornes extrêmes du potentiomètre (position **b** ou **c**).

Le déroulement d'un cycle de travail de la machine, décrite ci-dessus, s'établit comme suit.

Le chariot **3** occupe sa position d'origine d'attente en relation avec le poste de chargement **P₁**. Dans cette position, la pince de serrage **8** est superposée à la tablette de taquage **12** et la mâchoire mobile **10** occupe une position d'ouverture maximale.

Une liasse de documents ou de feuilles, telle que celle désignée par la référence **L**, est alors disposée entre les mâchoires ouvertes **9** et **10** pour reposer, par la tranche dorsale, sur la tablette de taquage **12** qui permet de les aligner veticalement.

La mise en service de la machine fait intervenir le serrage de la liasse **L** par le déplacement de la mâchoire mobile **10** qui provoque, par suite, le déplacement du curseur du potentiomètre **21**. En position de serrage de la liasse, le potentiomètre **21** génère un signal représentatif de l'épaisseur de la liasse serrée. Le circuit de sélection **30** place alors le commutateur **29** dans la position **a**, afin que le signal issu du potentiomètre pilote le bloc de réglage **22**.

Le bloc **22** peut ainsi assurer le réglage de la vitesse de rotation du moteur électrique **4**, de manière à déplacer le chariot **3** à vitesse supérieure, lorsque la liasse de feuilles à travailler présente une épaisseur inférieure à l'épaisseur maximale pouvant être travaillée par le moteur choisi. Le bloc **22** permet d'adapter la vitesse du moteur **4** et, par suite, celle du chariot **3**, en relation inverse de l'épaisseur détectée de la liasse, entre la vitesse la plus faible admissible pour une épaisseur maximale de la liasse et la vitesse la plus élevée pour une épaisseur minimale donnée de la liasse.

L'organe moteur **4** est alors alimenté pour déplacer, selon la vitesse déterminée, le chariot dans le sens de la flèche **f₁** et l'amener, en translation continue, à l'aplomb du poste **P₂**. La fraise **13**, entraînée en rotation par le moteur **14**, rogne la tranche dorsale de la liasse **L** pour l'égaliser et exécuter, simultanément, des rainures sensiblement transversales, communément appelées grecquages dans la technique de la reliure.

L'alimentation du moteur **4** est maintenue pour déplacer, toujours, le chariot dans le sens de la flèche **f₁**, de manière à faire défiler doute la longueur de la tranche dorsale en relation avec le poste **P₂**. Le chariot **3** translate, ensuite, la liasse **L** au poste **P₃** où elle est amenée à frotter sur le cylindre encolleur **17** entraîné en rotation. Le défilement relatif permet la dépose d'une couche ou d'une pellicule de colle fluide en fusion qui recouvre toute la surface de la tranche dorsale et pénètre dans les grecquages chargés d'en assurer l'ancrage lors de la solidification.

Le chariot **3** est ensuite transféré au-dessus du poste **P₄**, selon une vitesse réduite ou de ralentissement correspondant à la fin de course du trajet aller du chariot. A cet effet, le commutateur **29** est placé sur la position **b** par le circuit de sélection **30**.

Le chariot **3** est immobilisé à l'aplomb de la table **18** ayant, préalablement, reçu une couverture déposée à plat. La table **18** est élevée pour appliquer la couverture contre la tranche dorsale, en vue de favoriser la solidification de la pellicule adhésive et la liaison entre la liasse **L** et la couverture. Après élévation de la table **18**, l'organe moteur **20** est commandé pour rapprocher les lames **19** en vue de plier les plats de la couverture de part et d'autre du dos et affermir la liaison et le collage.

Les mâchoires **9** et **10** sont alors ouvertes et, simultanément, la table **18** est escamotée, de manière que la reliure, constituée par la couverture et la liasse **L**, tombe par gravité dans un convoyeur **31** disposé à l'aplomb du poste **4** pour guider la reliure en direction d'un guichet de sortie **32**.

Le moteur **4** est alors commandé pour ramener le chariot **3** au poste **P₁**, en vue de recevoir une nouvelle liasse de feuilles, destinée à être brochée. Pour augmenter la production horaire de la machine, le circuit de sélection **30** place le commutateur **29** en position **c**, de manière que le moteur **4** possède sa vitesse maximale sur le trajet retour du chariot **3**. La vitesse du chariot est réduite sur la fin de course du trajet retour par la sélection du commutateur **29** sur la position **b**.

Il est à remarquer qu'il peut être prévu un cycle de travail de la machine dans lequel les opérations de fraisage et de grecquage ne doivent pas être exécutées sur la liasse de feuilles, en vue d'obtenir, notamment, un bloc de feuilles auto-détachables. Selon de cycle de fonctionnement, le chariot **3** est commandé, à partir du poste **P₁**, en déplacement avec sa vitesse maximale pour passer au-dessus, successivement, du poste **P₂**, au niveau duquel la fraise **13** est arrêtée, et du poste **P₃**. Le chariot **3** finit, alors, sa course aller jusqu'au poste **P₄** avec sa vitesse réduite ou de ralentissement. Pour obtenir un tel cycle de travail, le circuit de sélection **30** place le commutateur **29** d'abord en position **c**, puis en position **b**.

Par ailleurs, il peut être envisagé de placer, en série avec le potentiomètre **21**, un second potentiomètre **33**, réglable manuellement par l'utilisateur, de manière à réduire la vitesse du chariot **3**, notamment en vue d'obtenir un grecquage plus important de la liasse de feuilles. Le potentiomètre **33** est monté, de telle sorte que l'utilisateur ne puisse pas régler une vitesse supérieure à celle donnée par le réglage du potentiomètre **21**.

Tel que cela apparaît plus précisément aux **fig. 2** et **4**, le potentiomètre **21** permet, également, de piloter l'organe moteur **20** pour régler, en relation avec l'épaisseur de la liasse de feuilles, le temps de serrage de la couverture contre la tranche dorsale de la liasse.

A cet effet, le commutateur **29** relie, en position **a**, le potentiomètre à une temporisation **34** agissant, par un contacteur **35**, sur le circuit d'alimentation du moteur électrique **20**. La temporisation **34** est réglée par une commande **36**. Le contrôle du temps de serrage au poste d'emboîtage tient compte de la quantité de colle déposée sur la tranche dorsale de la liasse, de manière à obtenir un durcissement correct de la colle déposée. Ce réglage permet ainsi d'augmenter la production horaire de la machine.

La **fig. 5** illustre une autre variante de réalisation du bloc de réglage **22** dans laquelle le bloc agit sur la fréquence d'alimentation de l'organe moteur **4** constitué par un moteur électrique à courant alternatif.

Dans cette variante de réalisation, le bloc de réglage **22** comporte un redresseur **40** alimenté par un réseau monophasé, un filtre **41** et un onduleur **42** alimentant en triphasé le moteur **4**. L'onduleur **42** est piloté par un boîtier électronique de commande **43** recevant les informations issues, d'une part, du potentiomètre **21**, via le commutateur **29** et, d'autre part, du réseau d'alimentation monophasé, ainsi que des sorties du filtre **41** et du redresseur **40**.

L'invention n'est pas limitée aux exemples décrits et représentés, car diverses modifications peuvent y être apportées sans sortir de son cadre.

## Revendications

**1** - Procédé de commande d'un organe moteur (**4**) d'une machine à relier, par brochage, des liasses de feuilles (**L**), l'organe moteur étant chargé d'entraîner, en déplacement alternatif sur une voie de guidage (**2**), un chariot (**3**) comportant une pince de serrage (**8**) formée d'une mâchoire mobile (**10**) et d'une mâchoire fixe (**9**), de manière à positonner le chariot successivement en relation avec un poste de chargement (**P₁**), un poste de fraisage (**P₂**), un poste d'encollage (**P₃**) et un poste d'emboîtage (**P₄**),

caractérisé en ce qu'il consiste à :

– détecter par un capteur (**21**), après chargement d'une liasse de feuilles, l'épaisseur de la liasse maintenue serrée entre les mâchoires du chariot,

– et à piloter l'organe moteur (**4**) pour modifier sa vitesse en relation inverse de l'épaisseur de la liasse détectée.

**2** - Procédé de commande selon la revendication 1, caractérisé en ce qu'il consiste à piloter automatiquement l'alimentation de l'organe moteur (**4**), à partir d'un signal fourni par le capteur (**21**).

**3** - Procédé de commande selon la revendication 1, caractérisé en ce qu'il consiste à placer un capteur potentiométrique linéaire dont le curseur (**21₁**) est monté solidaire de la mâchoire mobile (**10**).

**4** - Procédé de commande selon la revendication 1 ou 2, caractérisé en ce qu'il consiste à commander l'alimentation de l'organe moteur (**4**), à partir du signal issu du capteur, uniquement sur le trajet aller du chariot.

**5** - Procédé selon la revendication 1, caractérisé en ce qu'il consiste à commander l'alimentation de l'organe moteur (**4**), de manière que ce dernier possède une vitesse maximale sur le trajet retour du chariot.

**6** - Procédé selon la revendication 1, caractérisé en ce qu'il consiste à commander l'alimentation de l'organe moteur, de manière que ce dernier possède une vitesse de ralentissement en fin de course des trajets aller et retour du chariot.

**7** - Procédé selon la revendication 1, caractérisé en ce qu'il consiste à piloter, en relation avec l'épaisseur détectée de la liasse, le temps de serrage du poste d'emboîtage (**P₄**).

**8** - Dispositif de commande pour une machine à relier, par brochage, des liasses de feuilles (**L**), du type comportant un organe moteur (**4**) chargé d'entraîner, en déplacement alternatif sur une voie de guidage (**2**), un chariot (**3**) comportant une pince de serrage (**8**) formée d'une mâchoire mobile (**10**) de d'une mâchoire fixe (**9**), le chariot étant apte à être positionné, successivement, en relation avec un poste (**P₁**) de chargement du chariot avec une liasse de feuilles, un poste (**P₂**) de fraisage de la tranche dorsale de la liasse, on poste (**P₃**) d'encollage de la tranche dorsale fraisée et en poste (**P₄**) d'emboîtage et de serrage par un second organe moteur (**20**), de la tranche dorsale fraisée et encollée sur une couverture,

caractérisé en ce qu'il comprend :

– un capteur (**21**) de détection de l'épaisseur de la liasse de feuilles chargée et maintenue serrée entre les mâchoires du chariot, apte à délivrer un signal représentatif de l'épaisseur de la liasse serrée,

– et un bloc réglage (**22**) de la vitesse de l'organe moteur (**4**), piloté par le signal issu du capteur, en relation inverse de l'épaisseur de la liasse détectée.

**9** - Dispositif de commande selon la revendication 8, caractérisé en ce que le capteur (**21**) est constitué par un potentiomètre linéaire dont le curseur (**21₁**) est monté solidaire de la mâchoire mobile (**10**) du chariot.

**10** - Dispositif de commande selon la revendication 8, caractérisé en ce qu'il comprend une temporisation (**34**) pilotée par le signal issu du capteur et destinée à commander le temps de serrage du second organe moteur (**20**).

**11** - Dispositif de commande selon la revendication 9 ou 10, caractérisé en ce qu'il comprend un commutateur (**29**) à trois positions (**a,b,c**) placé sous la dépendance d'un circuit de sélection (**30**) et disposé aux bornes du potentiomètre pour transmettre au bloc de commande un signal provenant du curseur ou de l'une des bornes du potentiomètre.

**12** - Dispositif de commande selon la revendication 8, caractérisé en ce que le bloc de réglage (**22**) agit sur la tension d'alimentation de l'organe moteur constitué par un moteur électrique à courant continu et comporte un régulateur de vitesse (**23**) recevant les informations du commutateur, un régulateur d'intensité (**24**), un circuit (**27**) destiné à commander les gâchettes des thyristors d'un redresseur (**28**) alimentant le moteur.

**13** - Dispositif de commande selon la revendication 8, caractérisé en ce que le bloc de réglage (**22**) agit sur la fréquence d'alimentation de l'organe moteur constitué par un moteur électrique à courant alternatif et comporte un redresseur (**40**), un filtre (**41**), un onduleur (**42**) alimentant le moteur et un boîtier de pilotage (**43**) recevant les information du commutateur.

**14** - Dispositif de commande selon la revendication 8 ou 9, caractérisé en ce que le potentiomètre (**21**) comporte, en série, un potentiomètre (**33**) réglable manuellement.

**15** - Machine à relier par brochage comportant un dispositif de commande selon l'une des revendications 8 à 14.

**Patentansprüche**

1. Verfahren zum Steuern eines Antriebsorgans (4) für eine Buchbindemaschine zum Heften von Blattstapeln (L), wobei dieses Antriebsorgan die Aufgabe hat, einen Wagen (3) auf einer Führungsbahn (2) hin und her zu bewegen, wobei dieser Wagen eine Spannzange (8) aufweist, die aus einer beweglichen Klaue (10) und einer festen Klaue (9) gebildet ist, in solcher Weise, daß der Wagen nacheinander bezüglich einer Ladestation ($P_1$), einer Hobelstation ($P_2$), einer Klebestation ($P_3$) und einer Einbaustation ($P_4$) verschoben wird,
   dadurch gekennzeichnet, daß es in folgendem besteht:
   – mittels eines Fühlers (21) nach dem Laden eines Blattstapels die Dicke des Stapels zu erfassen, der zwischen den Klauen des Wagens eingespannt gehalten wird,
   – und das Antriebsorgan (4) in solcher Weise gesteuert wird, daß seine Geschwindigkeit in umgekehrter Beziehung zu der erfaßten Dicke des Stapels gesteuert wird.

2. Steuerverfahren nach Anspruch 1, dadurch gekennzeichnet, daß die Versorgung des Antriebsorgans (4) automatisch mittels eines Signals gesteuert wird, welches der Fühler (21) liefert.

3. Steuerverfahren nach Anspruch 1, dadurch gekennzeichnet, daß ein linearer Potentiometer-Fühler eingesetzt wird, dessen Schleifer ($21_1$) fest mit der beweglichen Klaue (10) verbunden ist.

4. Steuerverfahren nach Anspruch 1 oder 2, dadurch gekennzeichnet, daß die Versorgung des Antriebsorgans (4) mittels des von dem Fühler abgegebenen Signals nur auf dem Hinweg des Wagens gesteuert wird.

5. Verfahren nach Anspruch 1, dadurch gekennzeichnet, daß die Versorgung des Antriebsorgans (4) in solcher Weise gesteuert wird, daß dieses eine maximale Geschwindigkeit auf dem Rückweg des Wagens aufweist.

6. Verfahren nach Anspruch 1, dadurch gekennzeichnet, daß die Versorgung des Antriebsorgans in solcher Weise gesteuert wird, daß dieses eine verminderte Geschwindigkeit am Ende der Hinbewegung und der Rückbewegung des Wagens aufweist.

7. Verfahren nach Anspruch 1, dadurch gekennzeichnet, daß die Zeit des Einspannens in der Einbaustation ($P_4$) in Abhängigkeit von der erfaßten Dicke des Stapels gesteuert wird.

8. Steuervorrichtung für eine Buchbindemaschine zum Heften von Blattstapeln (L), vom Typ mit einem Antriebsorgan (4), dessen Aufgabe darin besteht, einen Wagen (3) auf einer Führungsbahn (2) hin und her zu bewegen, wobei dieser Wagen eine Spannzange (8) aufweist, die aus einer beweglichen Klaue (10) und einer festen Klaue (9) gebildet ist, wobei der Wagen ferner geeignet ist, um nacheinander bezüglich einer Station ($P_1$) zum Beladen des Wagens mit einem Blattstapel, einer Station ($P_2$) zum Hobeln der Rückseite des Stapels, einer Station ($P_3$) zum Auftragen eines Klebers auf der gehobelten Rückseite sowie einer Station ($P_4$), in welcher die gehobelte und mit Kleber versehene Rückseite durch ein zweites Antriebsorgan (20) gegen einen Einband gedrückt wird, verschoben zu werden,
   dadurch gekennzeichnet, daß sie umfaßt:
   – einen Fühler (21) zur Erfassung der Dicke des geladenen Blattstapels, der zwischen den Klauen des Wagens gehalten wird, zur Erzeugung eines Signals, das für die Dicke des eingespannten Stapels repräsentativ ist,
   – und einen Einstellblock (22) zum Einstellen der Geschwindigkeit des Antriebsorgans (4), gesteuert durch das von dem Fühler abgegebene Signal sowie in umgekehrter Beziehung zur erfaßten Dikke des Stapels.

9. Steuervorrichtung nach Anspruch 8, dadurch gekennzeichnet, daß der Fühler (21) durch ein lineares Potentiometer gebildet ist, dessen Schleifer ($21_1$) fest mit der beweglichen Klaue (10) des Wagens verbunden ist.

10. Steuervorrichtung nach Anspruch 8, dadurch gekennzeichnet, daß sie einen Zeitgeber (34) aufweist, der durch das von dem Fühler abgegebene Signal gesteuert wird und dazu bestimmt ist, die Zeit des Einspannens durch das zweite Antriebsorgan (20) zu steuern.

11. Steuervorrichtung nach Anspruch 9 oder 10, dadurch gekennzeichnet, daß sie einen Schalter (29) mit drei Stellungen (a, b, c) aufweist, der von einer Selektionsschaltung (30) abhängig ist und an den Anschlüssen des Potentiometers liegt, um an den Steuerblock ein Signal vom Schleifer oder von einem der Anschlüsse des Potentiometers abzugeben.

12. Steuervorrichtung nach Anspruch 8, dadurch gekennzeichnet, daß der Einstellblock (22) auf die Versorgungsspannung des Antriebsorgans einwirkt, welches durch einen elektrischen Gleichstrommotor gebildet ist, und einen die Informationen vom Schalter empfangenden Geschwindigkeitsregler (23), einen Stromregler (24) sowie eine Schaltung (27) umfaßt, die dazu bestimmt ist, die Steuerelektroden der Thyristoren eines Gleichrichters (28) anzusteuern, durch den der Motor gespeist wird.

13. Steuervorrichtung nach Anspruch 8, dadurch gekennzeichnet, daß der Einstellblock (22) auf die Versorgungsfrequenz des Antriebsorgans einwirkt, welches durch einen elektrischen Wechselstrommotor gebildet ist, und einen Gleichrichter (40), ein Filter (41), einen Wechselrichter (42), der den Motor speist, und eine Steuereinheit (43) aufweist, welche die Informationen vom Schalter empfängt.

14. Steuervorrichtung nach Anspruch 8 oder 9, dadurch gekennzeichnet, daß das Potentiometer (21) in Reihenschaltung ein von Hand einstellbares Potentiometer (33) aufweist.

15. Buchbindemaschine zum Heften, mit einer Steuervorrichtung nach einem der Ansprüche 8 bis 14.

**Claims**

1. A method of operating a motor means (4) of an adhesive binding machine for sets (L) of pages, said motor means being adapted to cause reciprocation along a guide path (2) of a carriage (3) comprising a gripper (8) formed by a moving jaw (10) and fixed jaw (9), in such a manner as to position the carriage successively in relation to a loading station ($P_1$), a milling station ($P_2$), a gluing station ($P_3$) and an encasing station ($P_4$), characterized in that it consists in:
   – a detecting by means of a sensor (21) the thickness of a set of pages after input into the machine, while the set of pages is being held between the jaws of the carriage, and
   – controlling the motor means (4) in order to modify its speed in a manner inversely related to the thickness of the set of pages being detected.

2. The method as claimed in claim 1 characterized in that it consists in automatically controlling the power supply to the motor means (4) in response to a signal provided by the sensor (21).

3. The method as claimed in claim 1 characterized in that it consists in placing a linear potentiometer sensor having a sliding contact ($21_1$) thereof connected with said moving jaw (10).

4. The method as claimed in claim 1 or claim 2 characterized in that the supply of the motor means (4) is controlled in response to a signal from the sensor only during the leading pass of the carriage.

5. The method as claimed in claim 1 characterized in that the supply of the motor means (4) is so controlled that the motor means is operated at a maximum speed during return motion.

6. The method as claimed in claim 1 characterized in that the supply to the motor means (4) is controlled in such a manner that the motor means is run at a reduced speed at the end of the to and fro passes.

7. The method as claimed in claim 1 characterized in that the time of pressing in the encasing station ($P_4$) is controlled in a manner related to the detected thickness of the set of pages.

8. A device for controlling a binding machine adapted to adhesively bind sets (L) of pages, of the type comprising a drive means (4) for reciprocatingly driving along a path (2), a carriage (3) having a gripper (8) formed by a moving jaw (10) and a stationary jaw (9), said carriage being adapted to be successively positioned in relationship with a loading station ($P_1$) for charging the carriage with a set of pages, to a milling station for milling a back face of such set of pages, then to a gluing station ($P_3$) for the application of adhesive to the milled back face and thence to an encasing station ($P_4$) for the application of a cover to the set of pages and pressing, with a second drive means (20), such cover onto the milled back of the set for bonding the cover thereto, characterized in that the device comprises:
   – a sensor (21) to sense the thickness of the loaded set of pages held gripped between the jaws of the carriage, said sensor being arranged to provide a signal representative of the thickness of the set of pages which is so gripped, and

– a regulating unit (22) for modifying the speed of the motor means (4) in response to an output signal from the sensor in reverse relationship with the detected thickness of the set of pages.

9. The device as claimed in claim 8 characterized in that the sensor (21) is formed by a linear potentiometer with a sliding contact ($21_1$) joined to the moving jaw of the carriage.

10. The device as claimed in claim 8 characterized in that it comprises a timer (34) responding to a signal from the sensor and intended to set the time of gripping of the second motor means.

11. The device as claimed in claim 9 or claim 10 characterized by comprising a three way (a, b, c) switch (29) and a selection circuit (30) adapted to operate such switch which is connected with terminals of such potentiometer in order to transmit a signal from the sliding contact or one of said terminals to the control unit.

12. The device as claimed in claim 8 characterized in that the regulating unit (22) is adapted to modify the voltage of power supplied to the motor means, which is in the form of a DC motor, such unit including a speed of rotation regulator (23) receiving information from the switch, an amperage regulator (24) and a circuit (27) adapted to control the triggers of thyristors of a rectifier (28) for the supply of the motor means.

13. The device as claimed in claim 8 characterized in that the regulating unit (22) is adapted to modify the frequency of electrical power supplied to the motor means, which includes an AC motor, such unit comprising a rectifier (40), a filter (41), an inverter (42) to feed the motor means and a controller (43) receiving information from the switch.

14. The device as claimed in claim 8 or 9 characterized in that the potentiometer (21) comprises, in series, a manually adjustable potentiometer (33).

15. A binding machine for the adhesive binding of sets of pages including a device as claimed in any of claims 8 to 14.

EP 0 337 291 B1

$P_1$  $L$  $21_1$  $f_1$  $P_2$  2  $P_3$  $P_4$

8  3  21  13  15  17  16  19

12  18

5  14  31  20

4  32

1

Fig.1

21

29

20

34

35

36

220 V

Fig.4

Fig.2

Fig.5

Fig.3